# EUROPÄISCHE PATENTSCHRIFT

(11) **EP 0 573 869 B1**
(45) Veröffentlichungstag und Bekanntmachung des Hinweises auf die Patenterteilung: **27.03.1996**
(21) Anmeldenummer: 93108742.3
(22) Anmeldetag: 01.06.1993
(51) Int. Cl.: C08F 210/02, C08F 2/00

(54) **Verfahren zur Herstellung von Copolymerisaten des Ethylens mit Vinylestern**
Process for the manufacture of copolymers of ehtylene and vinyl esters
Procédé de préparation de copolymères de l'éthylène et d'esters vinyliques

(30) Priorität: 11.06.1992 DE 4219130
(43) Veröffentlichungstag der Anmeldung: 15.12.1993
(73) Patentinhaber: BASF Aktiengesellschaft, D-67063 Ludwigshafen (DE)
(72) Erfinder: Pfleger, Klaus, Dr., W-5047 Wesseling (DE); Arnold, Gerhard, W-5047 Wesseling (DE); Schiller, Siegfried, W-5040 Bruehl (DE); Schumacher, Manfred, W-5205 Sankt Augustin (DE)

(56) Entgegenhaltungen:
- DE-A- 2 617 412
- DE-B- 1 177 344
- US-A- 3 254 071

## Beschreibung

Die Erfindung betrifft ein Verfahren zur Herstellung von Copolymerisaten des Ethylens mit Vinylestern durch Copolymerisation von 100 Gew.-Teilen Ethylen mit 0,1 bis 30 Gew.-Teilen Vinylester in einem kontinuierlich betriebenen, rohrförmigen Polymerisationssystem bei Drücken von 500 bis 4000 bar und Temperaturen von 100 bis 400°C in Gegenwart von radikalisch zerfallenden Polymerisationsinitiatoren.

Die bei obiger Polymerisation entstehenden Ethylen-Vinylester-Copolymerisate - im weiteren Copolymerisate genannt - werden beispielsweise als Folienmaterial, Kabelummantelungen bzw. Klebstoffe verwendet.

Das Verfahren zur Herstellung des Copolymerisats erfolgt in Rohrreaktoren, die beispielsweise in "Ullmann's Encyclopädie der technischen Chemie", 4. Auflage, Band 19, Seiten 173-175 beschrieben sind.

Der Ausdruck Ethylen-Vinylester-Copolymerisate umfaßt Copolymerisate mit Gehalten an einpolymerisiertem Comonomerenanteil von 0,1 bis 30,0, bevorzugt 0,5 bis 20,2 Gew.-%, die einen Schmelzindex von 0,1 bis 25 g/10 min, bestimmt nach ASTM-D 1238-65T bei einer Temperatur von 190°C und einem Auflagegewicht von 2,16 kg, und eine Dichte von 0,890 bis 0,934 g/cm³, gemessen nach DIN 53 479, aufweisen.

Als Vinylester kommen sämtliche mit Ethylen bei den angegebenen Temperaturen und Druckverhältnissen copolymerisierbaren Vinylester in Betracht. Solche Comonomere sind z.B. Vinylester der Carbonsäuren mit C₁- bis C₈-, vorzugsweise C₁- bis C₆-Atomen. Insbesondere bevorzugt ist Vinylacetat.

Das Ethylen wird mit den Vinylestern in Gegenwart radikalischer Polymerisationsinitiatoren copolymerisiert. Unter radikalischen Polymerisationsinitiatoren sollen diejenigen Katalysatoren verstanden werden, die auch für die Homopolymerisation des Ethylens unter hohem Druck verwendet werden.

Geeignet beispielsweise ist Sauerstoff, zweckmäßigerweise in Mengen von 2 bis 100 Mol-ppm, bezogen auf das zu polymerisierende Ethylen. In Betracht kommen außerdem Peroxide und andere Radikalbildner sowie Gemische von Peroxiden, Hydroperoxiden sowie Mischungen aus Sauerstoff und Peroxiden und/oder Hydroperoxiden.

Als Beispiele für Peroxide und Hydroperoxide seien genannt: tert.-Butylperoxypivalat, Di-tert.-butylperoxid, tert.-Butylhydroperoxid, tert.-Butylperbenzoat, p-Menthanhydroperoxid und Dilauroylperoxid. Unter radikalischen Polymerisationsinitiatoren sollen auch Verbindungen wie Azo-isobuttersäuredinitril verstanden werden. Man kann auch Mischungen aus Sauerstoff und einem oder mehreren Peroxiden verwenden. Bevorzugt wird die Copolymerisation des Ethylens mit Vinylestern durch Luftsauerstoff initiiert.

Gegenenfalls arbeitet man in Gegenwart von Polymerisationsreglern. Mit Hilfe der Polymerisationsregler ist es möglich, den Schmelzindex der entstehenden Ethylen-Copolymerisate einzustellen. Als Regler eignen sich beispielsweise Wasserstoff, Ketone, Aldehyde, Alkohole, Ether oder normale oder verzweigte Kohlenwasserstoffe. Vorzugsweise verwendet man Propan, Propylen, Methylethylketon oder Propionaldehyd. Die Polymerisationsregler werden im allgemeinen in Mengen von 0,2 bis 5 mol-%, bezogen auf das zu polymerisierende Ethylen eingesetzt. In einer besonderen Ausgestaltung des Verfahrens arbeitet man ohne zusätzlichen Polymerisationsregler, da die eingesetzten Vinylester Reglereigenschaften besitzen. Die Copolymerisation wird im allgemeinen in Abwesenheit eines Lösungsmittels durchgeführt. Die geringen Mengen eines inerten Lösungsmittels, wie Benzol, Mineralöl oder andere inerte Lösungsmittel, in denen die Polymerisationsinitiatoren gelöst werden, können gegenüber den anderen Einsatzstoffen vernachlässigt werden. Wird mit Sauerstoff als Polymerisationsinitiator gearbeitet, dann kann jegliches Lösungsmittel entfallen.

Die Herstellung der vorab beschriebenen Copolymerisate ist bekannt und in der Patent-Literatur beschrieben, beispielsweise in der US-Patent 4 080 411 und DE-Patentschrift 2 617 412.

Bei den bekannten Verfahren kommt es im Produktionsprozeß, vor allem mit zunehmender Betriebszeit, zu Störungen, die aus Schwankungen der Reaktionstemperaturen resultieren. Beginnend vom Anfang der Reaktionszone pflanzen sich die Temperaturschwankungen schubweise über die gesamte Reaktionszone fort. Im Extremfall sind als Folge der Instabilität sehr heftige Zersetzungen des Reaktionsgemisches beobachtet worden.

Der vorliegenden Erfindung lag daher die Aufgabe zugrunde, die Reaktionsführung der Copolymerisation des Ethylens mit Vinylestern in Rohrreaktoren so stabil zu gestalten, daß die genannten Störungen wirkungsvoll beseitigt und Zersetzungen des Reaktionsgemisches ausgeschlossen werden.

Die Aufgabe sind erfindungsgemäß dadurch gelöst, daß die Temperaturführung für das Reaktionsgemisch bestehend aus Ethylen, Vinylester, Polymerisationsinitiator und gegebenenfalls Regler nach dem Eintritt in die Reaktionszone derart gestaltet wird, daß der Quotient dT/dt (Temperaturanstieg pro Zeiteinheit) bei einem Wert zwischen 2,0 und 3,8°C pro Sekunde konstant gehalten wird.

Eine bevorzugte Wahl des Quotienten Temperaturanstieg pro Zeiteinheit beträgt 2,5 bis 3,5°C pro Sekunde.

Beim Einsatz von Reaktionsgemischen, die mehr als 10 Gew.-% Vinylester enthalten, sollte der Quotient dT/dt im Bereich von 2,8 bis 3,35°C pro Sekunde gehalten werden.

Beim Einsatz von Reaktionsgemischen, die weniger als 10 Gew.-% Vinylester enthalten, sollte der Quotient dT/dt im Bereich von 2,1 bis 2,8°C pro Sekunde gehalten werden.

Das Verfahren arbeitet hier bei Drücken von 500 bis 4000 bar und Temperaturen von 100 bis 400°C in Gegenwart von radikalisch zerfallenden Polymerisationsinitiatoren, indem die Temperaturführung für das Reaktionsgemisch nach Eintritt in die Reaktionszone derart gestaltet wird, daß der Quotient in einem genau definierten Bereich gehalten und ein Grenzwert nicht überschritten wird.

In dem erfindungsgemäßen Verfahren wir nun so verfahren, daß die Temperaturen für das Reaktionsgemisch nach seinem Eintritt in die Reaktionszone - bevor das Maximum der Reaktionstemperaturen erreicht wird - in einem exakt definierten Bereich eingestellt und konstant gehalten werden.

Es zeigte sich, daß ein auch über längere Laufzeiten sehr stabiles Reaktionsverhalten erreicht wird, wenn der Quotient dT/dt (Temperaturanstieg pro Zeiteinheit) für das Reaktionsgemisch bei seinem Durchlauf durch die ersten zehn Rohre der Reaktionszone bei Werten zwischen 2,0 und 3,8°C/Sekunde eingestellt wird.

Die Einstellung der Temperaturführung in den ersten fünf bis zehn Reaktionsrohren - dies bedeutet je nach Reaktortyp eine Strecke von bis zu 200 Metern - erfolgt über die Konzentration an Polymerisationsinitiator, die Gastemperatur des Gemischs am Eingang zur Reaktionszone und durch die Menge des durch die Kühlmäntel der Reaktionsrohre durchgeleiteten Kühlmediums.

Als Kühlmedium wird in bekannter Weise Druckwasser im Temperaturbereich von 160 bis 200°C verwendet.

In einer bevorzugten Ausführung des Verfahrens arbeitet man mit einer vom allgemeinen Heißwasser-Kühlkreislauf getrennten Kühleinrichtung für die Sektion, in der der Quotient dT/dt konstant gehalten werden muß.

Die Gastemperatur des Reaktionsgemisches am Eingang zur Reaktionszone wird auf maximal 175°C begrenzt.

Bei dem erfindungsgemäßen Verfahren zeigte sich überraschenderweise, daß es zu keinen Temperaturschwankungen über den gesamten Reaktionsbereich kommt und die Anzahl der Störungen im Produktionsprozeß durch das stabilere Laufverhalten sehr stark reduziert wird, es werden erheblich längere Laufzeiten erzielt. Zu Zersetzungen ist es bei Einhalten der in den Patentansprüchen 1 bis 3 aufgezeigten Bedingungen nicht gekommen; die angegebenen oberen Grenzwerte des Quotienten dT/dt dürfen dabei nicht überschritten werden.

Ein weiterer Vorteil des erfindungsgemäßen Verfahren ist eine Verbesserung der Produktqualität, da durch die Schaffung von konstanteren Temperaturverhältnissen im Reaktionsteil des Reaktors ein homogeneres Produkt erhalten wird.

### Beispiel 1

In einem Rohrreaktor wurde ein Gemisch von 1000 Gew.-Teilen Ethylen, 25 Gew.-Teilen Vinylacetat und 12 Mol-ppm Sauerstoff, bezogen auf Ethylen, bei einem Druck von 2300 bar copolymerisiert. Das Reaktionsgemisch wurde mit einer Temperatur von 175°C in die Reaktionszone eingeführt.

In den ersten zehn Rohren der Reaktionszone (vorderes Drittel) wurde die Temperaturführung derart vorgenommen, daß der Quotient dT/dt (Temperaturanstieg pro Sekunde) bei 2,8°C/Sekunde konstant blieb.

Das Kühlmedium (Heißwasser), das durch die Kühlmäntel der Reaktionsrohre gepumpt wurde, hatte eine Eintrittstemperatur von 175°C. Die Durchflußmenge an Heißwasser betrug 6,8 m³ pro Stunde für die betreffende Kühlsektion.

Das Reaktionsgemisch erreichte in der zweiten Hälfte der Reaktionszone seine Maximaltemperatur von 301°C.

Die Temperatur über die gesamte Reaktionszone war nur geringen Schwankungen unterworfen. Auch nach einem mehrwöchigen Betrieb war das Reaktionsverhalten immer noch sehr stabil. Unter den genannten Reaktionsbedingungen ereigneten sich keine Zersetzungen.

Es wurden 265 kg eines sehr homogenen Ethylen-Vinylacetat-Copolymeren erhalten, das eine gute Homogenität und sehr gute Folieneigenschaften aufwies.

Die weiteren Analysen zeigten folgende Werte:

| | |
|---|---|
| Schmelzindex | 0,62 ± 0,05 g/10 Min. |
| Dichte | 0,9240 g/cm³ |
| Vinylacetat-Gehalt | 2,40 ± 0,05 Gew.-% |

### Beispiel 2

Eine Mischung aus 1000 Gew.-Teilen Ethylen, 140 Gew.-Teilen vinylacetat und 15 mol-ppm Sauerstoff, bezogen auf Ethylen, wurde in einem Rohrreaktor unter einem Druck von 2300 bar copolymerisiert.

Das Reaktionsgemisch wurde mit einer Temperatur von 170°C in die Reaktionszone eingeführt.

Der Temperaturanstieg in den ersten zehn Rohren der Reaktionszone wurde bei einem Wert von dT/dt = 3,1°C/Sekunde konstant gehalten. Hierzu wurde als Kühlmedium Heißwasser mit einer Eintrittstemperatur von 170°C durch die Kühlmäntel der Reaktionsrohre gepumpt; die Durchflußmenge an Heißwasser betrug 7,0 m³/Stunde für die betreffende Kühlsektion.

Das Reaktionsgemisch erreichte in der zweiten Hälfte der Reaktionszone seine Maximaltemperatur von 305°C.

Die Temperaturen über die gesamte Reaktionszone schwankten bei den genannten Reaktionsbedingungen praktisch nicht; Zersetzungen ereigneten sich ebenfalls keine.

Es wurden 282,5 kg eines homogenen Ethylen-Vinylacetat-Copolymeren erhalten, das gute Folieneigenschaften besitzt.

Die weiteren Analysen zeigten folgende Werte:

| | |
|---|---|
| Schmelzindex | 4,2 ± 0,05 g/10 Min. |
| Dichte | 0,9328 g/cm³ |
| Vinylacetat-Gehalt | 13,7 ± 0,05 Gew.-% |

### Vergleichsbeispiel 1

Wie im Beispiel 1 wurde eine Mischung aus 1000 Gew.-Teilen Ethylen, 25 Gew.-Teilen Vinylacetat und 12 mol-ppm Sauerstoff, bezogen auf Ethylen, im gleichen Rohrreaktor bei 2300 bar zur Reaktion gebracht.

Die Polymerisationsbedingungen stimmten bis auf eine Ausnahme mit denen im Beispiel 1 überein. In Abänderung des Beispiels 1 wurde die Temperaturführung am Eingang zur Reaktionszone nicht in einem genau definiertem Bereich gehalten, d.h. der Quotient dT/dt für das Reaktionsgemisch bei seinem Durchlaufen der ersten zehn Reaktorrohre wurde nicht konstant gehalten.

In der zweiten Hälfte der Reaktionszone erreichte das Reaktionsgemisch seine Maximaltemperatur, die zwischen 298 und 310°C lag. Es traten Temperaturschwankungen in der gesamten Reaktionszone von 5 bis 10°C auf, wobei sich die Lage des Temperaturmaximums ebenso wie die Höhe der Maximaltemperatur selbst veränderten. Es wurde beobachtet, daß sich die Schwankungen mit zunehmender Laufzeit sogar verstärkten.

Bei einigen Produktionsläufen, die sich über einen Zeitraum von mehr als drei Wochen erstreckten, traten Zersetzungen ein. Das erhaltene Ethylen-Vinylacetat-Copolymere war aufgrund der Temperaturschwankungen etwas inhomogen.

Die Analysen zeigten folgende Werte:

| | |
|---|---|
| Schmelzindex | 0,60 ± 0,65 g/10 Min. |
| Dichte | 0,9328 g/cm³ |
| Vinylacetat-Gehalt | 2,2 bis 2,5 Gew.-% |

### Vergleichsbeispiel 2

Dem Rohrreaktor wurde wie im Beispiel 2 eine Mischung aus 1000 Gew.-Teilen Ethylen, 140 Gew.-Teilen Vinylacetat und 15 mol-ppm Sauerstoff, bezogen auf Ethylen, zugeführt und unter einem Druck von 2300 bar polymerisiert.

Die Reaktionsbedingungen stimmten bis auf eine Ausnahme mit denen im Beispiel 2 überein. Im Gegensatz zu Beispiel 1 und 2 wurde der Temperaturanstieg des Reaktionsgemisches nach seinem Eintritt in die Reaktionszone bzw. beim Durchlaufen der ersten zehn Rektionsrohre nicht gezielt bei einem konstanten Wert gehalten. Das Reaktionsgemisch erreichte in der zweiten Hälfte der Reaktionszone Maximaltemperaturen von 300 bis 312°C.

Es wurden Temperaturschwankungen im gesamten Bereich der Reaktionszone beobachtet, dabei veränderte sich sowohl die Lage des Temperaturmaximums als auch die Höhe des Temperaturmaximums selbst. Die Temperaturschwankungen lagen anfangs bei 6 bis 12°C und wurden mit zunehmender Laufzeit größer, was bei Betriebszeiten von mehr als drei Wochen zu Zersetzungen führte.

Das erhaltene Ethylen-Vinylacetat-Copolymere war nicht so homogen wie das nach Beispiel 2 gewonnene Produkt.

Die Analysen zeigten folgende Werte:

| | |
|---|---|
| Schmelzindex | 4,1 ± 4,4 g/10 Min. |
| Dichte | 0,9327 g/cm³ |
| Vinylacetat-Gehalt | 13,5 bis 13,9 Gew.-% |

## Patentansprüche

1. Verfahren zur Herstellung von Copolymerisaten des Ethylens mit Vinylestern durch Copolymerisation von 100 Gew.-Teilen Ethylen mit 0,1 bis 30 Gew.-Teilen Vinylester in einem kontinuierlich betriebenen, rohrförmigen Polymerisationssystem bei Drücken von 500 bis 4000 bar und Temperaturen von 100 bis 400°C in Gegenwart von radikalisch zerfallenden Polymerisationsinitiatoren, dadurch gekennzeichnet, daß die Temperaturführung für das Reaktionsgemisch bestehend aus Ethylen, Vinylester, Polymerisationsinitiator und gegebenenfalls Regler nach dem Eintritt in die Reaktionszone derart gestaltet wird, daß der Quotient dT/dt (Temperaturanstieg pro Zeiteinheit) bei einem Wert zwischen 2,0 und 3,8°C pro Sekunde konstant gehalten wird.

2. Verfahren nach Anspruch 1, dadurch gekennzeichnet, daß bei Einsatz von Reaktionsgemischen, die mehr als 10 Gew.-% Vinylester enthalten, der Quotient dT/dt zwischen 2,8 bis 3,35°C pro Sekunde eingestellt und konstant gehalten wird.

3. Verfahren nach Anspruch 1, dadurch gekennzeichnet, daß bei Einsatz von Reaktionsgemischen,die 0,1 bis 10 Gew.-% Vinylester enthalten der Quotient dT/dt zwischen 2,1 bis 2,8°C pro Sekunde eingestellt und konstant gehalten wird.

## Claims

1. A process for preparing copolymers of ethylene with vinyl esters by copolymerizing 100 parts by weight of ethylene with from 0.1 to 30 parts by weight of vinyl ester in a continuous tubular polymerization system at from 500 to 4000 bar and from 100 to 400°C in the presence of free radical polymerization initiators, which comprises controlling the temperature for the reaction mixture, comprising ethylene, the vinyl ester, the polymerization initiator and optionally a regulator, after entry into the reaction zone in such a way that the ratio dT/dt (temperature increase per unit time) is kept constant at a value within the range from 2.0 to 3.8°C per second.

2. A process as claimed in claim 1, wherein if the reaction mixture contains more than 10% by weight of vinyl ester the ratio dT/dt is set to a value within the range from 2.8 to 3.35°C per second and kept constant at that value.

3. A process as claimed in claim 1, wherein if the reaction mixture contains from 0.1 to 10% by weight of vinyl ester the ratio dT/dt is set to a value within the range from 2.1 to 2.8°C per second and kept constant at that value.

## Revendications

1. Procédé de préparation de copolymérisats de l'éthylène avec des vinylesters par copolymérisation de 100 parties en poids d'éthylène avec 0,1 à 30 parties en poids de vinylester dans un système de polymérisation tubulaire fonctionnant en continu à des pressions allant de 500 à 4000 bar et des températures comprises entre 100 et 400°C en présence d'initiateurs de polymérisation à action destructrice sur les radicaux, caractérisé en ce que la régulation de température concernant le mélange de réaction constitué d'éthylène, de vinylester, d'initiateur de polymérisation et, le cas échéant, de régulateur, après entrée dans la zone de réaction, est réalisée de manière que le quotient dT/dt (augmentation de la température par unité de temps) soit maintenu constant, à une valeur comprise entre 2,0 et 3,8°C par seconde.

2. Procédé selon la revendication 1, caractérisé en ce que, en cas d'utilisation de mélange de réaction contenant plus de 10 % en poids de vinylester, le quotient dT/dt est réglé à une valeur comprise entre 2,8 et 3,35°C par seconde et est maintenu constant.

3. Procédé selon la revendication 1, caractérisé en ce qu'en cas d'utilisation de mélange de réaction contenant de 0,1 à 10 % en poids de vinylester, le quotient dT/dt est réglé à une valeur comprise entre 2,1 et 2,8°C par seconde et est maintenu constant.
